Europäisches Patentamt

European Patent Office

Office européen des brevets

(11) Publication number: **0 110 337**
**B1**

(12) **EUROPEAN PATENT SPECIFICATION**

(45) Date of publication of patent specification: **09.11.88**

(21) Application number: **83111799.9**

(22) Date of filing: **25.11.83**

(51) Int. Cl.⁴: **G 03 B 17/04,** G 03 B 17/52

(54) **Foldable camera.**

(30) Priority: **26.11.82 JP 208271/82**

(43) Date of publication of application:
**13.06.84 Bulletin 84/24**

(45) Publication of the grant of the patent:
**09.11.88 Bulletin 88/45**

(84) Designated Contracting States:
**DE GB NL**

(56) References cited:
**DE-A-2 448 223**
**DE-B-2 222 477**
**US-A-4 147 421**

(73) Proprietor: **KONISHIROKU PHOTO INDUSTRY CO. LTD.**
**No. 26-2, Nishishinjuku 1-chome Shinjuku-ku Tokyo 160 (JP)**

(72) Inventor: **Hamaguchi, Takehiko**
**940-214, Utsuki-machi**
**Hachioji-shi Tokyo (JP)**
Inventor: **Iwaida, Kenichi**
**1306-5, Haganuma-cho**
**Hachioji-shi Tokyo (JP)**
Inventor: **Hazama, Kiyoaki**
**c/o Konishiroku Photo Ind. Co. 2970 Ishikawa-cho**
**Hachioji-shi Tokyo (JP)**

(74) Representative: **Gille, Christian, Dipl.-Ing. et al Türk, Gille + Hrabal Patentanwälte Bruckner Strasse 20**
**D-4000 Düsseldorf 13 (DE)**

## Description

The present invention relates to a foldable camera comprising a camera body wherein a film transporting mechanism is provided, a movable member pivotable relative to the camera body, the movable member carrying a photographing lens and being adapted to move between a folded position and an open position, a motor mounted in the body and an acuating means transmitting driving force of the motor, and particularly to a folding camera called an instant camera wherein self-developing of film is possible.

The "self-developing" type camera for amateur use in which "self-developing" type film is used tends to be a relatively large sized camera because of the large image size. Thus, a camera which is small-sized, light weight and easy in operation is required, therefore, what is considered to be efficient is a so-called foldable camera whereby the camera body containing a film cassette and a movable member containing a photographing lens and a shutter portion are connected by a light-shielding member such as a bellows or the like. The movable member is folded to the camera body and thus, the camera volume is minimized for carrying.

However, when the camera itself is divided into a fixed camera body containing a film cassette and movable member containing a photographing lens a shutter portion etc., the transmission of the motive power for the action of the shutter and the like from the fixed portion to the movable portion is difficult because the parts connecting both camera body and movable member are only flexible shielding members such as bellows and arms having a large displacement.

Further, when the photographing is finished on the "self-developing" type camera, the unit is required to perform two actions; one, to develop the exposed sheet film in the film cassette and to feed it out from the unit, and second, to set the shutter to prepare the following exposure.

On the "self-developing" type camera of the ordinary type without movable portions and not of the foldable type, it is easy to construct the unit so that aforesaid two actions are done within one operation, and therefore when motorizing such operation, it is sufficient to provide only one motor, whereas on the folding camera, it is difficult to perform said two actions within one operation, and therefore it is necessary to provide two motors for motorizing, one motor to be provided in the fixed camera body portion, a second motor in the movable member carrying the photographing lens, a shutter and the like.

As explained above when motorizing the functions particularly of the foldable camera, two motors are required and also two sets of driving circuits. This is economically disadvantageous and prevents miniaturization of the camera because space for accepting two motors is required.

It is an object of the present invention to avoid the disadvantages of a conventional foldable camera wherein both the camera body and the movable member respectively being provided with a motor, whereby the camera tends to be large and complicated.

The object is attained by a foldable camera as outlined in claim 1.

In the following, the invention is illustrated by drawings showing only exemplary embodiments, namely;

Fig. 1 a side view showing the structure of the self-developing foldable camera according to the present invention, and

Fig. 2 a front view of the key portion showing a set ring portion of the shutter.

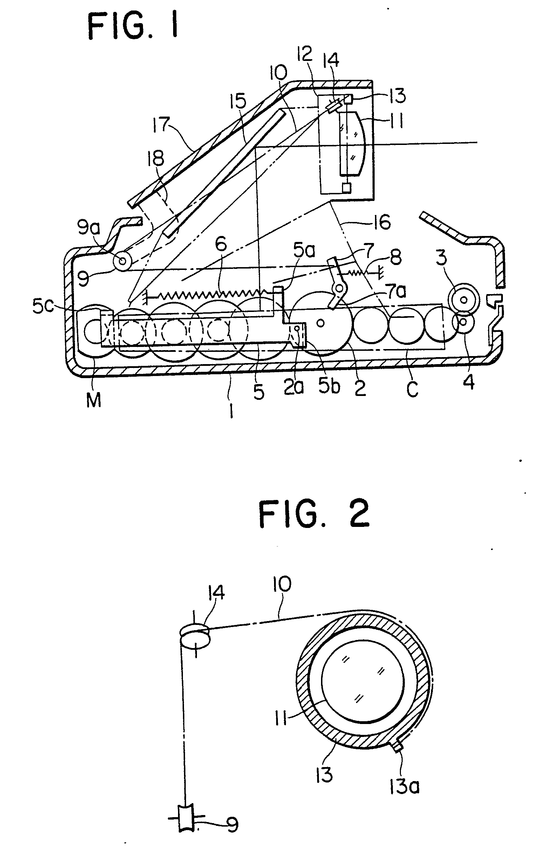

Referring to Fig. 1, on a camera body 1 which is a fixed portion, there is provided a motor M, a disk 2 to which the rotation is transmitted by a gear train from the motor M and feed-out rollers 3 and 4 that develop the films and deliver them. A moving plate 5 can move rightward in the figure but is urged leftward by a tension spring hooked on a protrusion 5a provided on the moving plate 5.

Further, the bell-crank 7 is provided rotatably near aforesaid disk 2 and is energized clockwise by a comparatively weak tension spring 8 and one end of a flexible string member 10 is fixed on the bell-crank 7, the other end being connected through a pulley 9 to a movable portion mentioned later. The pulley 9 enables direction-changing of the string member transmitting the motor power with less power loss caused by friction and the like.

A movable cover 17 may be rotated over a certain-degree arc clockwise owing to a hinge metal fitting 18 having a common rotating shaft with the shaft 9a of aforesaid pulley 9 and to the guide of arms, which are not illustrated. Thus, the camera can be folded.

The cover 17 contains a photographing lens 11 and a shutter 12. A corresponding end of the flexible string member 10 is fixed at protrusion 13a of a set ring 13 located on the circumference of the photographing lens 11 belonging to the shutter 12. The direction of the flexible string member 10 is changed by a pulley 14 near the shutter 12. The numeral 15 indicates a reflecting mirror for exposing a sheet film of image reversal type loaded in a film cassette C after reflecting the light of a subject passed through the photographing lens 11, and 16 is a bellows for shielding the area between the camera body 1 and the cover 17, a part of which is shown in the figure.

The action thereof will be explained next.

Fig. 1 shows a self-developing foldable camera in a photographing state. When the shutter 12 is opened and closed and thereby the exposure is finished after the shutter-release-button is pressed, the motor M rotates in response to the completion of the exposure and revolves a disk 2 which is a one-revolution driving member counterclockwise through the gear train, which reduces speed. The driving pin 2a provided on the disk 2 engages a latch 5b on the moving plate 5 and moves it rightward against the tension spring

6 when the disk 2 rotates. The moving plate 5 comprises a claw portion 5c at its left end which feeds out a sheet of exposed sheet film in the film cassette to the position where it engages rollers 3 and 4, Since the rollers 3 and 4 are also simultaneously rotated by the motor M through the gear train, aforesaid exposed sheet film is held by the rollers 3 and 4 and, after being developed, is fed out by the camera.

During that period, aforesaid driving pin 2a disengages from the latch 5b, and the moving plate 5 is returned to its original position by the tension spring 6, while the disk 2 further continues rotating counterclockwise, and the driving pin 2a engages the end portion 7a of the bell-crank 7. Thus, the bell-crank 7 rotates clockwise. The bell-crank 7 pulls the flexible string member 10 to the right, its directions being changed by pulleys 9 and 14. The set ring 13 of the shutter 12 is rotated counterclockwise against a restoration spring, which is not illustrated. Thus, an operating member arranged in the shutter 12 is energized, and the operation of shutter-setting is carried out.

The disk 2 still continues its counterclockwise rotation, and the driving pin 2a disengages from the end portion 7a of the bell-crank 7, which releases the bell-crank 7 and thus, the set ring 13 rotates clockwise and returns to its original position by the restoration spring thereof, and therefore the bell-crank 7 also returns to its original position through the flexible string member 10. The tension spring 8 operates to provide constant tension to the flexible string member 10.

When the disk 2 reaches its starting position after making one revolution, the motor M owing to the action of a contact, which is not illustrated, stops and the camera is in the state for preparation of photographing again.

The usage of the flexible string member 10 makes the transmission of motive power from the fixed portion of the camera to the movable portion simple and easy. Especially, the provision of the pulley 9 on the rotating shaft of the movable portion such as the cover 17 or near the rotating shaft makes the displacement of the flexible string member 10 extremely small, when the camera is opened. The pulley 9 is a direction-changing member guiding the flexible string member 10, and thus, there is no problem that the string member 10 comes off the pulley 9 when changing the state of the camera. No unnecessary load is applied on the shutter portion or other parts, and it is now possible to arrange the camera constituents compactly. Therefore, the present invention provides a foldable camera which is simple, small-sized and low-priced.

In the present example, the motor M is provided in the camera body portion 1, but providing it in the cover 17 gives the same advantage.

As a flexible string member transmitting the motive power, a thin string made of metal, natural fiber or synthetic resin having small elasticity is desirable and as a direction-changing member, a fixed guide member having a small coefficient of friction gives the same effect as the pulley, so that the object of the present invention can be attained in different manners.

## Claims

1. A foldable camera, comprising a body (1) wherein a film transporting mechanism (5) is provided, a movable member (17) pivotable relative to said body at a point (9a), said movable member (17) carrying a photographic lens (11) and being adapted to move between a folded position and an open position, a motor (M) mounted in said body for driving said film transporting mechanism (5), and an actuating means (2) driven by said motor, characterized in that said actuating means (2) is capable of engaging a string means (10), said string means transmitting the movement of said actuating means (2) to a setting ring of said lens (11) or a shutter (12) associated therewith, and that a direction-changing means (9) for said string means is provided adjacent said pivot point (9a) whereby said motor (M) can drive said film transporting mechanism or said lens (11) or said shutter (12).

2. The foldable camera as claimed in claim 1, characterized in that a pulley (9) is used as said direction-changing means.

## Patentansprüche

1. Klappkamera, mit einem Apparatekörper (1), in dem ein Filmtransportmechanismus (5) untergebracht ist, einem beweglichen Deckteil (17), das relativ zum Apparatekörper um einen Punkt (9a) schwenkbar ist, wobei das bewegliche Deckteil (17) eine photographische Linse (11) trägt und zwischen einer eingeklappten Position und einer geöffneten Position bewegbar ist, einem Motor (M), der den Filmtransportmechanismus (5) treibt, und einer vom Motor getriebenen Antriebsscheibe (2), dadurch gekennzeichnet, daß die Antriebsscheibe (2) einen Strang (10) greift, der die Bewegung der Antriebsscheibe (2) auf einen Einstellring der Linse (11) oder eine dazugehörende Abdeckblende (12) überträgt, und daß am Schwenkpunkt (9a) ein Richtungsänderungsglied (9) für den Strang (10) vorgesehen ist, wodurch der Motor (M) entweder den Filmtransportmechanismus oder die Linse (11) oder die Abdecklende (12) treibt.

2. Klappkamera nach Anspruch 1, dadurch gekennzeichnet, daß das Richtungsänderungsglied eine Führungsrolle (9) ist.

## Revendications

1. Appareil pliant, avec un corps d'appareil (1) dans lequel un mécanisme (5) de transport de film est logé, une partie mobile (17) pivotant autour d'un point (9a) relative audit corps, ladite partie mobile (17) portant une lentille (11) photographique et mouvant entre une position pliée et une position ouverte, un moteur (M) monté dans ledit corps actionnant ledit mécanisme (5) de transport de film et un appareil moteur (2) actionné par ledit moteur, charactérisé en ce que ledit appareil moteur (2) peut engrener une corde (10), ladite corde transmittant le mouvement dudit appareil moteur (2) à une bague ajustante de ladite lentille (11) ou à un couvercle (12) y associe, et qu'un moyen de changement de direction (9) pour ladite corde est prévu à la proximité dudit point (9a) de pivotement, par quoi ledit moteur (M) est capable d'actionner ledit mécanisme de transport de film ou ladite lentille (11) ou ledit couvercle (12).

2. Appareil pliant selon la revendication 1, characterisé en ce que ledit moyen de changement de direction est une poulie conductrice (9).

# FIG. I

# FIG. 2